# EUROPEAN PATENT APPLICATION

(11) **EP 2 200 388 A1**
(43) Date of publication of application: **23.06.2010**
(21) Application number: 08172661.4
(22) Date of filing: 22.12.2008
(51) Int. Cl.: H04W 72/08

(54) **Method and apparatuses for interference mitigation in a wireless communication network**

(71) Applicant: Fujitsu Ltd., Kawasaki-shi, Kanagawa 211-8588 (JP)
(72) Inventor: Lu, Yanling, Hayes, Middlesex UB4 8FE (GB); Sarperi, Luciano, Hayes, Middlesex UB4 9QS (GB)
(74) Representative: Wilding, Frances Ward

(57) **Abstract**

The invention relates to an interference mitigation method for use in a wireless communication network, the wireless communication network having:
a subscriber station;
a first network station; and
a second network station; wherein
there is transmission between the subscriber station and the first network station, and the subscriber station is prohibited from using the second network station; and wherein
interference is experienced by the subscriber station as a result of transmissions from the second network station respectively;
the method including adapting the allocation of transmission resources to be used in the wireless communication network to mitigate such interference.

## Description

The invention relates to methods and apparatus for use in inter-cell interference mitigation (ICIM).

Inter-cell interference is a major factor limiting the performance of wireless communication systems. In cellular wireless communication systems the location and configuration of base stations is carefully planned to provide good coverage and low interference between cells/sectors.

The installation by network customers of base stations with a localised network coverage cell, such as femto base stations covering a femto cell, pico base stations covering a pico cell and micro base stations covering a micro cell is becoming increasingly common in wireless communication systems. A femto base station or other local cover base station can be installed in, for example, a building from within which network subscriber stations experience high path loss in transmissions to and from a main network base station. Femto base stations can be installed by a customer in his own premises. These femto base stations can improve network coverage, particularly within the femto cell, and can also improve spectral efficiency. However, since the deployment of these femto base stations is unplanned, they can also cause significant interference between the cell served by an existing main network base station and the femto cell if they operate in the same frequency band.

In examples throughout this document referring to a femto base station covering a femto cell it should be understood that the example is not restricted to femto base stations and can alternatively be applied to any base station including micro base stations and pico base stations and their respective cells.

Access to a base station can be limited to a closed user group. For example, a network customer may install a private base station such as a private femto base station serving a private femto cell in which only the customer's own subscriber stations are allowed access to the private femto base station. This can cause severe interference to network subscriber stations which are close to the private femto base station but are not allowed access to it, i.e. they cannot handover to it, and therefore have to be served by a more distant main network base station.

There is likely to be high path loss between the network subscriber station and the main network base station, therefore, if the private femto base station and the main network base station use overlapping spectral resources, the network subscriber station will experience a high level of interference.

Of course access to the local cover or any other base station could also be denied due to overload of the relevant cell, or local radio environment factors, so that private base stations are merely one example in which access is denied.

Similarly, the network subscriber station close to the private (or otherwise unavailable) femto base station but not allowed access to it may increase its transmit power to compensate for the high path loss between it and the main network base station. In the case that the private femto base station is communicating with another subscriber station, then the private femto base station is likely to experience high levels of interference.

It is desirable to protect subscriber stations and base stations from interference caused by the subscriber station being denied access to a particular base station.

It is also desirable to protect subscriber stations served by main network base stations under the network operator's control from interference caused by private base stations such as private femto base stations.

It is also desirable to protect private base stations from interference caused by mobile stations served by main network base stations under the network operator's control.

It is also desirable to provide an efficient signalling scheme suitable for use by a large number of private base stations, possibly simultaneously.

It also desirable to provide reliable inter-cell interference mitigation through centralised coordination of resources.

It is advantageous to achieve the above desirable features without compromising the signal quality of subscriber stations served by private base stations.

According to embodiments of one aspect of the present invention, an interference mitigation method for use in a wireless communication network is provided,
the wireless communication network having a subscriber station, a first network station, and a second network station; wherein there is transmission between the subscriber station and the first network station, and the subscriber station is prohibited from using the second network station; and wherein interference is experienced by the subscriber station as a result of transmissions from the second network station;
the method including adapting the allocation of transmission resources to be used in the wireless communication network to mitigate such interference.

Adapted allocation of transmission resources between network stations (which may or may not be under the network operator's control) provides an effective means to reduce interference in network devices, by which is meant any type of station included in the network, for example subscriber stations and network stations.

The wireless communication network may comprise systems operating according to the IEEE802.16m system, but embodiments may also be implemented in networks operating according to other systems and sets of standards, such as the legacy WiMAX standards and 3GPP LTE or 3GPP LTE Advanced.

The subscriber station may be a mobile station (MS) such as, for example, a mobile telephone, a smartphone, a personal digital assistant, a laptop, a netbook, or a PC, or it may be a fixed apparatus utilising the wireless communication network such as, for example, a desktop computer or television. To simplify terminology, a mobile station or MS as referred to herein indicates any type of subscriber station and need not be mobile.

The network station may comprise any apparatus which serves directly or indirectly to control access by other stations to network resources, which may include, for example, permitting access to the resources, allocating bandwidth, monitoring connections, and so on. Thus this may be a base station (BS) or a relay station (RS).

The first network station is suitable for receiving and/or sending wireless transmissions from/to a subscriber station, and may be a main network base station under the network operator's control.

The second network station is also suitable for receiving and/or sending wireless transmissions from/to a subscriber station, and may be a main network base station under the operator's control, or it may be a base station which has been installed other than by the network operator i.e. it may be a private base station which has been installed by a network customer. The second network station may be a local cover base station, for example one of a pico base station, a micro base station, or a femto base station, but it may also be a macro base station, or another type of base station or relay station.

The second network station may be a private network station, such as a private femto base station, which can only be used by a closed user group. Alternatively, the subscriber station may be prohibited from using the second network station for other reasons, for instance because the second network station capacity has reached a maximum number of users.

Adapting the allocation of transmission resources may include restricting the resources that particular network devices can use for communicating with some or all other network devices. For instance, a network station (for example the second network station) may be blocked from using certain transmission resources. This network station must not use the blocked transmission resources for traffic (transmission and/or reception). Additionally, adapting the allocation of transmission resources may include specifying resources to be used for certain transmissions, for example, specifying at what times a base station (such as the first network station) should transmit to and/or receive from a particular subscriber station. Thus downlink or uplink transmission resources, or preferably both, can be adapted.

The transmission resources should preferably be adapted so that as a result, the interfering network devices are allocated non-interfering transmission resources, or resources that show only limited interference. Such resources can also be described as orthogonal or quasi-orthogonal. In other words, transmission resources corresponding to the particular transmission resources that one network station is blocked from using can be specified for use by the other network station for communicating with the subscriber station experiencing interference. Thereby, the interference mitigation method can protect subscriber stations which are attached to a network station under the network operator's control from interference caused by private network stations. Furthermore, the interference mitigation method can protect private femto base stations from interference caused by subscriber stations attached to network stations under the network operator's control.

Preferably, adapting the allocation of transmission resources includes the second network station only using transmission resources outside of blocked transmission resources within which it does not transmit, and/or adapting the allocation of transmission resources includes specifying particular transmission resources to be used by the first network station for communicating with the subscriber station. Advantageously, the particular transmission resources and the blocked transmission resources correspond to one another, so that the subscriber station uses the transmission resources unavailable to the second network station for communication with the first network station. In this way, interference is mitigated, and the blocked transmission resources and the transmission resources specified for use for communication between the interfered subscriber station and the first network station can be described as orthogonal or quasi-orthogonal. The blocked transmission resources and specified particular transmission resources could also be described as complementary or compatible.

Preferably, the first network station or a central network entity controls the adaptation of the allocation of transmission resources.

The allocation of network resources may be adapted by the first network station. In the case that the first network station is under the network operator's control, this enables the network operator to adapt transmission resources to be used by the first network station and the second network station. The first network station can adapt the transmission resources allocated to (an)other network station(s) possibly via a wired or 'backbone' connection, or alternatively over a wireless link.

Alternatively, it is possible that a further network entity adapts allocation of the resources and carries out any steps necessary to instruct the first and/or second network station to use the allocated transmission resources. This further network entity may be, for example, a self-organising network server, or central control entity or it may be another type of network device.

The network entity controlling the adapting of the allocation of transmission resources may thus also define the blocked or restricted transmission resources and may thus also define the particular resources specified for use by the first network station in communication with the subscriber station.

In some preferred embodiments, the interference mitigation method includes defining the blocked transmission resources and/or the particular transmission resources in response to the current radio environment.

Defining the resources in response to the current radio environment may depend on where most interference is or is likely to be experienced, and could also be influenced by load on the particular network stations and the extent to which placing restrictions on resources will affect network performance. Defining may merely involve a selection from a list of preset restrictions or modes of operation, or there may be an algorithm that can be performed in response to certain parameters such as interference level, network load, capability of network station and subscriber station.

As an alternative to the blocked transmission resources being defined by the controlling network entity or first network station on the fly, the network may have a pre-defined set of adapted allocation resources to use for interference mitigation. In some preferred embodiments, the interference mitigation method includes the second network station storing a fixed set of blocked transmission resources; and/or the first network station storing a fixed set of particular transmission resources. In this case, the second network station may itself store its own set of restrictions to place on transmission resources. Here, initiating interference mitigation in the second network station may merely involve the first network station or network entity sending a message enabling the restrictions. Alternatively or additionally, these pre-defined restrictions may be stored by the first network station and may include specified particular transmission resources to be used by the first network station for communicating with the subscriber station. If there is no pre-storage in the second network station, the defined set of restrictions may be transmitted to the second network station via a backbone or wireless connection each time the interference mitigation method is performed. Incidentally, it could be that these restrictions on resources to be used by the second network station are in place permanently, or it could be that these restrictions are imposed in response to a signal from the network entity or first network station controlling the adaptation of allocation of transmission resources.

The need for interference mitigation may be determined by the subscriber station. For example, it could be that the method is triggered by satisfaction of a trigger condition and preferably that the trigger condition is based on a trigger parameter reflecting the level of interference. Satisfaction of the trigger condition may be as simple as a measurement of a quantity such as the SINR (signal to interference and noise ratio) being below a threshold value. Or, there may be some algorithm such as a rolling mean algorithm, or other algorithm which effectively monitors a property reflecting the signal quality over time. If the value calculated by this algorithm suggests a drop in signal quality over a period of time which may have been caused by interference, then the trigger condition is satisfied. The downlink interference experienced by a subscriber station in the network may be used to trigger interference mitigation for the network.

Preferably due to satisfaction of the trigger condition, but possibly due to some other stimulus, the interference mitigation method includes the subscriber station initiating the interference mitigation method by transmitting a request to the first network station, the request containing information identifying the second network station.

The method may also include a network station transmitting information notifying the subscriber station of a network station which it is prohibited from using. This information may be transmitted via a special structure of the preamble of a transmission so that the subscriber station can determine the presence of a network station which it is or may be prohibited from using.
Alternatively, the transmitted information may be a neighbourhood advertisement message which may be broadcast multicast, or unicast to the subscriber station, containing a list of network stations which the subscriber station is prohibited from using. Some other transmission containing the relevant information may be sent in place of a neighbourhood advertisement message.

In preferred embodiments, the request itself is sent because the subscriber station is aware of a drop in signal quality. However, the actual nature of the request depends on whether information such as that discussed above has been made available to the subscriber station. There are two main cases in which the interference mitigation method is likely to be initiated: the explicit case and the implicit case.

In the implicit case, the interfered subscriber station has no knowledge of the IDs of the network stations to which access is prohibited, such as private base stations. In this case, the request is a handover request in which the subscriber station is requesting a handover from the first network station to the second network station. Preferably, information notifying the subscriber station of a network station which it is prohibited from using is transmitted in response to the handover request.

For the implicit scenario, the subscriber station is unaware that it is prohibited from using the second network station, because it has not received information including the prohibition. There is a higher path loss between the subscriber station and the first network station than the potential path loss between the subscriber station and the second network station. Therefore the subscriber station requests a handover. Once the first network station receives a handover request from the subscriber station identifying a network station to which access is prohibited, the first network station can then initiate interference mitigation by sending out information including the prohibition.

The implicit case uses an implicit signalling scheme which can reduce the signalling overhead when a large number of private base stations are in the network.

In the explicit case, the subscriber stations being served by a main network station are informed about the network stations to which access is prohibited prior to the actual interference mitigation process being initiated. The subscriber station may be informed via a broadcast neighbourhood advertisement message, or alternative message, or the information identifying a base station to which access is prohibited may be contained in a special structure of the preamble of a transmission. In the explicit case, the interfered subscriber station may be aware that there is interference in the network and that access is prohibited to the base station to which it might otherwise request to handover. Thus, when interference is experienced, the subscriber station may transmit an interference mitigation request in which the second network station is identified. As noted above, information notifying the subscriber station of a network station which it is prohibited from using has been provided over the network, for example it has been transmitted by the first network station before the interference mitigation request, or has been received by decoding a preamble sent from the second network station.

Upon receipt of the interference mitigation request method, the first network station is operable to initiate interference mitigation.

Interference mitigation including the use of adapted allocations of transmission resources may continue until the controlling network entity or other network device ends such use. Ending interference mitigation may include sending a message to the second and optionally to the first network station to cancel the interference mitigation. The first network station may inform the second network station via the backbone connection to lift the restrictions. From this time onwards, and subject to any other ongoing restrictions, the second network station may use all available radio resources. Furthermore, the first network station may also use all available transmission resources for the subscriber station. However, it is possible that the decision to end interference mitigation is as a result of a termination request from the subscriber station, or a handover request by the subscriber station to a further base station to which access is allowed. In a similar way to triggering the request message by satisfaction of a trigger condition, it may be that the subscriber station sends a termination request to the first network station in response to satisfaction of a termination condition. In the case that the interference mitigation is controlled by a network entity other than the first network station, the first network station may then send a termination request message to the controlling network entity. Preferably, the interference mitigation method includes, upon satisfaction of a termination condition, the subscriber station transmitting a termination request, and preferably the termination condition is based on a termination parameter whose value is not affected by execution of the interference mitigation method.

The need to continue interference mitigation may be determined by the subscriber station, or the subscriber station may be informed of the need by a signal from another network device. Satisfaction of the termination condition may be as simple as a measurement of a quantity such as the SINR (signal to interference and noise ratio) being above a threshold value. Or, there may be some algorithm such as a rolling mean algorithm, or other algorithm which effectively monitors a property reflecting the signal quality over time. In order to terminate the interference mitigation, the termination condition should preferably be based on a measurement which allows the subscriber station or other network entity to determine the need for interference mitigation while interference mitigation is active. Therefore, it is advantageous to base the termination condition on a measurement which is not affected by active interference mitigation. One example of such a measurement is the SINR included in the preamble of the data frame in a IEEE802.16m system, but could also be an equivalent SINR measurement in another system. Another example is the use of one or multiple special measurement bursts sent by the second network station using the blocked transmission resources. This allows the interfered subscriber station to measure a property such as the SINR of these bursts while interference mitigation is active, thereby simulating a case where interference mitigation is not active to assess the need for interference mitigation.

The particular resource which is subject to the adapted allocation may be time, or it may be frequency, space, code, polarisation, power, amongst others. In fact, the adapted allocations may be applied in any dimension or dimensions as long as the interfering sources are assigned orthogonal or quasi-orthogonal resources, i.e. they do not interfere, or show only limited interference. Preferably, the transmission resources whose allocations are adapted are periods of time for transmission. Thereby, unlike in interference mitigation approaches which use adaptation of the transmit power or receiver attenuation in which the signal quality of subscriber stations served by network stations may be compromised when interference mitigation is performed, embodiments of the present invention avoid such signal quality compromises by assigning orthogonal or quasi-orthogonal resources to the interfering network entities in order to perform interference mitigation.

The adapted allocations of resource restrictions can be updated whilst interference mitigation is ongoing. The size or location of the blocked transmission resources may be changed, and/or the particular transmission resources allocated for use by the first network station may be changed. This updating may be desirable due to changes in the local radio environment, for example, the number of subscriber stations requiring interference mitigation from a particular network station or set of network stations may change. The interference mitigation method may thus include further adapting the allocation of transmission resources while the adapted allocation is in use.

In practical systems, particularly in which the second network station is a private base station, the second network station may not be as accurately synchronised as a first network station under the network operator's control. In this case, any restrictions or blocked resources to be imposed on, or used by, the second network station should be stricter than the specification of the resources for use by the first network station. This accommodates for any time, frequency, or other mismatch between the network stations. This may mean stricter in the sense that a broader range of transmission resources are blocked than are specified for use by the first network station. Advantageously, in order to compensate for any inaccuracy in synchronisation in the network, the blocked transmission resources are chosen to be a superset of the particular transmission resources.

In addition to the second network station, the wireless communication network may include at least one further network station which the subscriber station is prohibited from using; in which case adapting the allocation of transmission resources may include the or each further network station only using transmission resources outside of blocked transmission resources for that further network station. The blocked transmission resources may be the same for each of the second network station and the further network stations, or they may be different in each case, alternatively there may be some which have common blocked transmission resources, and some which have different blocked transmission resources. It is also possible that some or all of the second network station and the further network stations have different signalling in setting up interference mitigation.

Additional aspects of the invention relate to the wireless communication network, the various network devices and methods for use therein, as well as to corresponding computer program aspects. Features of each and all the aspects, including the preferable system features set out above may be combined as appropriate.

According to embodiments of a further aspect of the present invention there is provided a wireless communication network having a subscriber station, a first network station, and a second network station; the wireless communication network further comprising: access limiting means operable to prohibit the subscriber station from using the second network station; interference detection means operable to detect when interference is experienced by the subscriber station as a result of transmissions from the second network station; and interference mitigation means operable to adapt the allocation of transmission resources to be used in the wireless communication network to mitigate such interference.

Access limiting means may be any suitable means to check whether a subscriber station requesting access to a network station is a member of a closed user group or not. It may also be means to refuse a request for access to a network station when the load on the network station is high and resources are being used at a level that is near capacity.

Interference detection means may be suitable for measuring a value of a property reflecting the current level of interference and comparing it to a threshold value. Examples of such a property are SINR, or CINR (carrier to interference and noise ratio). Preferably these means are provided in the subscriber station.

In embodiments of a further aspect there is provided a subscriber station for use in a wireless communication network comprising the subscriber station, a first network station, and a second network station which the subscriber station is prohibited from using; the subscriber station comprising: reception means operable to receive an indication of adapted transmission resources for its own use from the network when interference is experienced by the subscriber station as a result of transmissions from the second network station, the indication being of transmission resources adapted to mitigate such interference; transmission means operable to transmit using the adapted allocation of transmission resources; and control means operable to control the transmission means to use transmission resources in accordance with the indication. A corresponding method in the subscriber station is also provided.

In embodiments of a yet further aspect there is provided a network station (or second network station) for use in a wireless communication network comprising the network station, a subscriber station, and a serving network station or first network station; the network station comprising: access limiting means operable to prohibit the subscriber station from using it; transmission means operable to transmit to other subscriber stations using allocated transmission resources; control means operable to allocate transmission resources to the transmission means; wherein the control means is operable, for interference mitigation purposes, only to allocate transmission resources to the transmission means outside of blocked transmission resources within which it cannot transmit. Preferably the control means is operable in this fashion specifically when interference is experienced by the subscriber station as a result of transmissions from the the network station, but the block may also be permanent. A corresponding method in the second network station is also provided.

In embodiments of a still further aspect there is provided a network station for use in a wireless communication system comprising the network station, a subscriber station, and a second network station which the subscriber station is prohibited from using; the network station comprising: transmission means operable to transmit to the subscriber station using allocated transmission resources; control means operable to allocate transmission resources to the transmission means; wherein when interference is experienced by the subscriber station as a result of transmissions from the second network station, the control means is operable to adapt the allocation of transmission resources to mitigate such interference. A corresponding method in the first network station is also provided.

The functions of the wireless communication network, network station and subscriber station may be controlled by software, firmware or hardware or any combination thereof. Thus, still further aspects of the invention relate to a computer program which, when executed on a computing device of the wireless communication system, carry out a method as set out above. Furthermore, yet further aspects of the invention relate to a computer program which, when downloaded onto a computing device of a communication system, network station or subscriber station causes it to become the communication system, network station or subscriber station as defined in any of the above apparatus statements of invention.

Preferred features of the present invention will now be described, purely by way of example, with reference to the accompanying drawings, in which:-
Figure 1 illustrates a network arrangement and transmission scenario in which downlink interference may occur;
Figure 2 illustrates a network arrangement and transmission scenario in which uplink interference may occur;
Figure 3 is a flowchart showing a method embodying the present invention;
Figure 4 illustrates an implicit signalling scheme embodying the present invention;
Figure 5 illustrates an explicit signalling scheme embodying the present invention; and
Figure 6 illustrates a specific example of adapting transmission resource allocations in embodiments of the present invention.

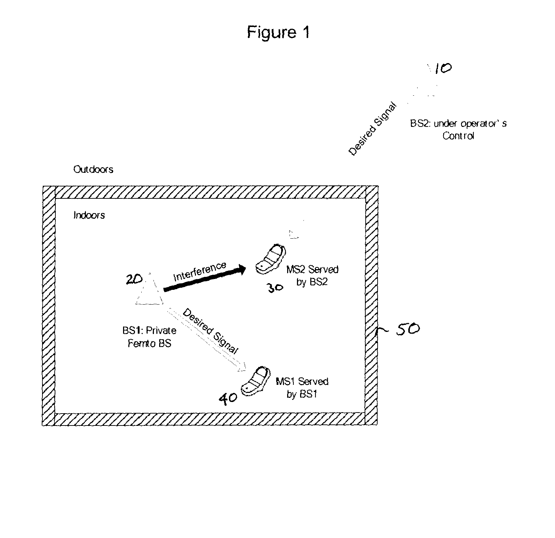

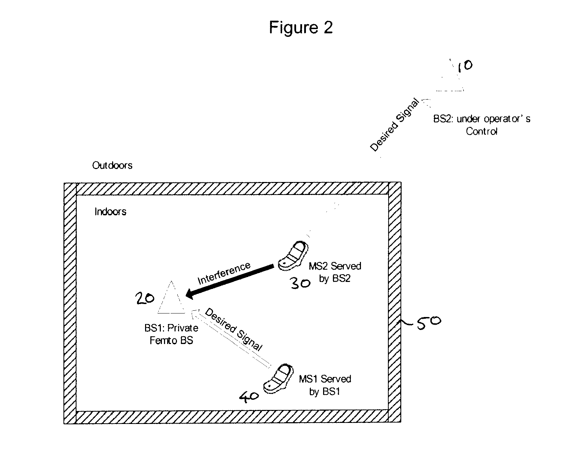

Figures 1 and 2 illustrate examples of network arrangements and transmission scenarios in which interference is experienced by the network. Although Figure 1, illustrating a downlink interference scenario, and Figure 2, illustrating an uplink interference scenario, are illustrated separately from one another, it should be understood that the two scenarios are likely to occur together as part of the same network arrangement. The skilled reader will appreciate that any uplink interference experienced by the private femto base station 20 is likely to be accompanied by downlink interference experienced by the mobile station 30, and vice versa.

The network arrangement shown in Figure 1 depicts two mobile stations 30, 40, a private femto base station 20, a base station under the network operators control 10, and a perimeter of a building 50. The base station 10 is under the network operator's control and lies outside of the building perimeter 50. The mobile station 30 lies inside the building perimeter 50, and signals are transmitted between the mobile station 30 and base station 10.

The private femto base station 20 and the mobile station 40 both lie inside the building perimeter 50. Signals are transmitted between the mobile station 40 and the private femto base station 20. The mobile station 30 and the mobile station 40 are allowed access to the base station under the network operator's control 10 and the private femto base station 20 respectively. The private femto base station 20 can only be used by a closed user group and, although there is a higher path loss between the mobile station 30 and the base station under the network operator's control 10 than there is between the mobile station 30 and the private femto base station 20, the mobile station 30 is prohibited from using the private femto base station 20.

Interference problems can arise in wireless communication systems when two or more transmissions occur more or less concurrently using overlapping spectral resources. Figure 1 and Figure 2 are illustrative of scenarios in which interference may be experienced by network devices.

The downlink interference scenario may occur in the case that a subscriber station is close to a network station but cannot handover to it due to access being prohibited, and the subscriber station has to be served by a more distant network station. The signal received by the subscriber station from the more distant network station is liable to have low power due to high path loss, hence the need to handover to a closer network station. The subscriber station will experience high interference from the closer network station if both the closer and the more distant network stations use overlapping spectral resources.

In a similar arrangement of network devices, i.e. a subscriber station being served by a more distant network station because access to a closer network station is prohibited, the uplink interference scenario can occur. In the uplink interference scenario shown in Figure 2, transmissions from the subscriber station to the more distant network station cause interference to be experienced by the closer network station. This problem may be exasperated by the subscriber station increasing transmit power to allow for the high path loss to the more distant network station.

The downlink signal received by the mobile station 30 from the base station under the network operator's control 10 has low power due to a high path loss. The high path loss may be due to the building perimeter 50 or other obstacles, or may be due to other factors such as physical distance between the base station and the mobile station.
Therefore, if the radio resources used by the private femto base station 20 in downlink communications with the mobile station 40 overlap with the radio resources used by the base station under the network operator's control 10 in downlink communications with the mobile station 30, the mobile station will experience a high level of interference as a result of transmissions by the private femto base station 20.

The network arrangement depicted in Figure 2 is the same as that depicted in Figure 1, hence the same reference numerals have been used. Figure 2 illustrates a scenario in which uplink interference is experienced by the private femto base station 20, and hence the specific signalling included in the Figure varies from that included in Figure 1. Signals are transmitted between the mobile station 30 and base station 10 and between the mobile station 40 and the private femto base station 20. The mobile station 30 and the mobile station 40 are allowed access to the base station under the network operator's control 10 and the private femto base station 20 respectively. However, the mobile station 30 is not allowed access to the private femto base station 20. In the case shown in Figure 2, there is a high path loss between the mobile station 30 and the base station under the network operator's control 10. Consequently, uplink communications from the mobile station 30 to the base station under the network operator's control 10 is likely to be transmitted with a high transmit power. Therefore, if both the mobile station 30 and the mobile station 40 use overlapping radio resources for uplink communications with their respective base stations 10, 20, the private femto base station 20 will experience a high level of interference as a result of transmissions from the mobile station 30.

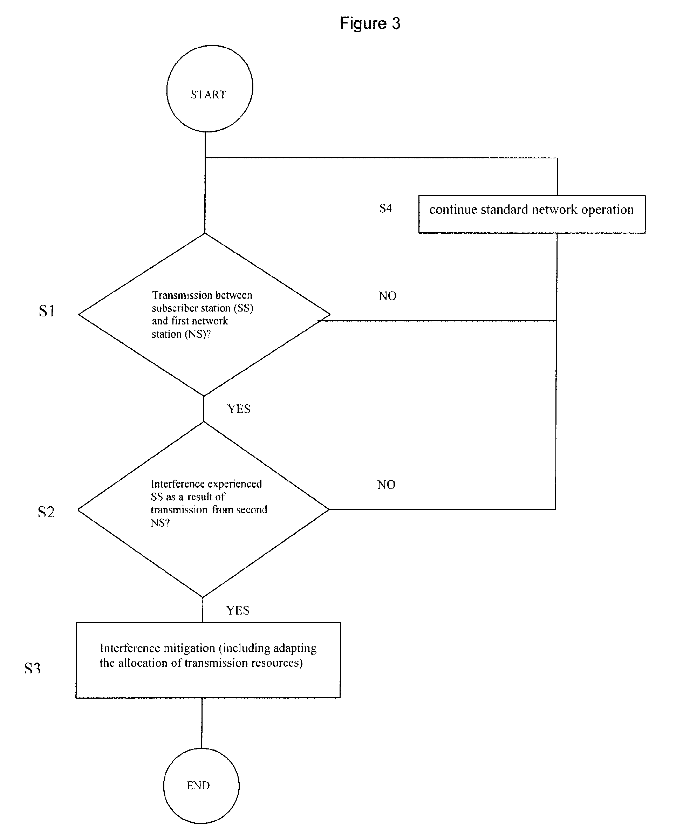

The flowchart shown in Figure 3 is for a general embodiment and demonstrates the logic underlying the method of the invention.

In the invention embodiments, there is a wireless communication system with a first network station, a second network station and a subscriber station. Although the subscriber station may be in communication with the first network station it is prohibited from communication with the second network station due to different ownership of the second network station or other restrictions. In the method, there is transmission taking place between the subscriber station and the first network station (S1) but interference is experienced by the second network station (S2) and/or the subscriber station due to the subscriber station proximity to the second network station. In this case, interference mitigation procedures (S3) are put into place to reallocate transmission resources so that the interference experienced as a result of this proximity is mitigated. Otherwise, standard network operation (S4) continues.

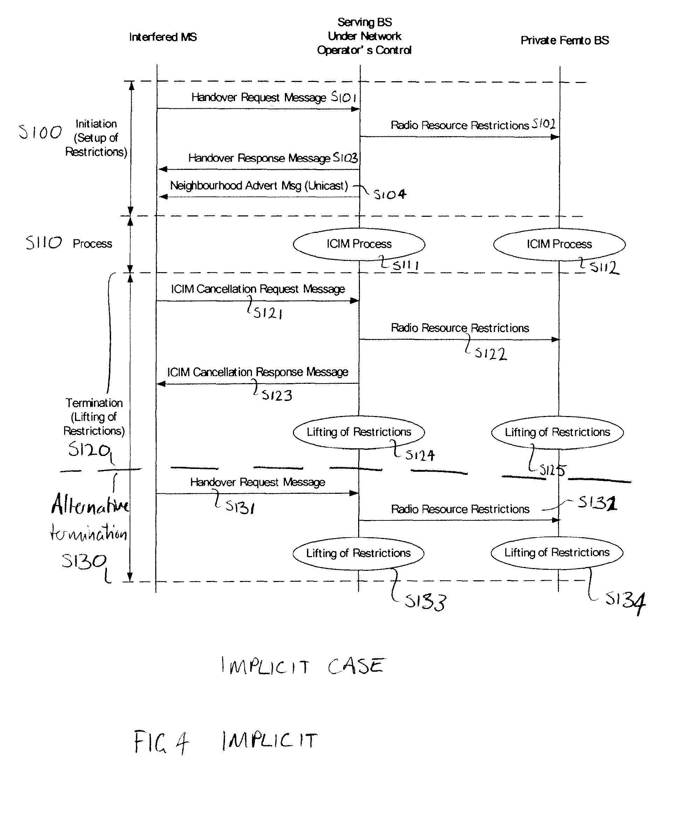

Figure 4 illustrates an example of the signalling which may occur leading up to, during, and after performing the method embodying the present invention. It is assumed for the purposes of this document that the first network station, the second network station, and the subscriber station all support the inter-cell interference mitigation method embodying the present invention. In any of the examples described in this document, an interference mitigation method capability negotiation may take place, for example between the first network station and the subscriber station. In this example, the subscriber station is a mobile station, the first network station is a serving base station under the network operator's control, and the second network station is a private femto base station. Since this example deals with a case where interference is experienced by the mobile station, the mobile station is referred to as an interfered mobile station.

The example in Figure 4 is a case in which the inter cell interference mitigation method is initiated implicitly, referred to as the implicit case.

Firstly, there is an initiation process S100 in which restrictions are setup. The interfered mobile station sends a handover request message S101 to the serving base station. Sending the handover request message may be prompted by satisfaction of a trigger condition such as the SINR of the signal received by the interfered mobile station from the serving base station under the network operator's control being below a threshold value. The handover request message contains a target cell ID or identifies a target base station, in this case the handover request message identifies the cell served by the private femto base station or identifies the private femto base station itself. The serving base station matches the target cell ID against a list of known private femto cell IDs. If the target cell ID does not belong to a private femto base station or other base station to which access is prohibited, normal handover procedures follow.

If the target cell ID is identified as belonging to a private femto base station, or other network station to which access is prohibited, then interference mitigation is started. The serving base station then defines a list of adaptations to the allocation of transmission resources to be made. This may include a set of restrictions for the private femto base station, or for multiple femto base stations. These restrictions, such as blocked transmission resources, are transmitted to the private femto base station or base stations via a backbone connection in step S102 or wireless link. It should be understood that several alternative procedures exist at this stage of the process. The resource restrictions may be pre-defined in the network, in which case the serving base station only needs to signal the private femto base station to enable the radio resource restrictions. In another variation, the private femto base station(s) may have resource restrictions always or already enabled. In this case S102 need not be performed i.e. no resource restrictions need to be signalled from the serving base station to the private femto base station via the backbone. It should be noted that in the case where there are multiple private femto base stations, or multiple base stations to which the interfered mobile station is prohibited access, a different choice of the alternatives listed above may be used for different subsets of the multiple base stations.

The serving base station also sends a handover response message S103 to the interfered mobile station including an indication that the handover request has been rejected. Furthermore, a unicast neighbourhood advertisement message or other related message is sent S104 containing a list of other base stations to which the interfered mobile station cannot handover. This unicast neighbourhood advertisement message S104 provides the interfered mobile station with information about other base stations to which access is prohibited, this may enable the same mobile station to request interference mitigation explicitly in future interference scenarios.

Following initiation S100, the process S100 of interference mitigation S111, S112 itself can be carried out.
Throughout this document, the term interference mitigation is used, but this can be also be referred to as inter-cell interference mitigation (ICIM), since the interference involves multiple cells. Interference mitigation is achieved by adapting transmission resource allocations. As explained previously, this may include imposing radio resource allocation restrictions on the private femto base station or on multiple private femto base stations which are located close to the interfered mobile station. It is possible that the private femto base station or base stations is/are already operating with resource allocation restrictions. The serving base station under the network operator's control can avoid interference between itself and private femto base stations by allocating transmission or radio resources to the interfered mobile station which correspond to the radio resource restrictions S102. For example, if the private femto base station only uses transmission resources outside of certain blocked transmission resources, then the serving base station may allocate itself transmission resources within those blocked resources for communication with the interfered mobile station.

Transmission using the adapted allocation of transmission resources will continue until termination S120. In this embodiment, termination begins with the interfered mobile station transmitting a cancellation request message S121 which is received by the serving base station. Termination may occur when the interfered mobile station leaves the vicinity of the private femto base station contributing to the interference. Whatever the signalling processes, in order to terminate the interference mitigation, there may be a termination condition based on a measurement which allows the mobile station to determine the need for interference mitigation while interference mitigation is active.

On reception of the cancellation request message S121 the serving base station replies by transmitting a cancellation response message S123 which is received by the interfered mobile station. The serving base station may also use the backbone connection to signal the private femto base station(s) to lift restrictions where necessary. This may be in the form of a new set of radio resource restrictions S122 which, for example, do not contain any blocked transmission resources. It may be that the message sent as S122 is not necessary as the private femto base station is configured to operate with restrictions permanently imposed. Once the restrictions are lifted for the serving base station S124 and one, all, or some, of the private femto base stations, ordinary network operation is resumed.

Figure 4 also demonstrates an alternative termination signalling process S130. The alternative termination signalling process can be performed instead of the termination process S120 including S121 to S125. However, the satisfaction of a termination condition may occur in embodiments using either signalling process.

In the alternative termination process S130, the interfered mobile station forming part of the network in which the interference mitigation process S111, S112 is in effect, transmits a handover request message S131 which is received by the serving base station. If the target cell ID or target base station of the handover request message S131 is not identified by the serving base station as a base station to which access is prohibited, the interference mitigation process S111, S112 can be terminated, and radio resource restrictions lifted S133, S134. The serving base station may use the backbone connection or wireless link to signal the private femto base station(s) to lift restrictions where necessary. This may be in the form of a new set of radio resource restrictions S132 which, for example, do not contain any blocked transmission resources. It may be that the message sent as S132 is not necessary as the private femto base station is configured to operate with restrictions permanently imposed. Once the restrictions are lifted for the serving base station and one, all, or some, of the private femto base stations, ordinary network operation is resumed.

Lifting restrictions for the serving base station S124, S132 may include allocating resources in such a way that consideration does not need to be given to whether or not resources correspond to resource restrictions in private femto base stations.

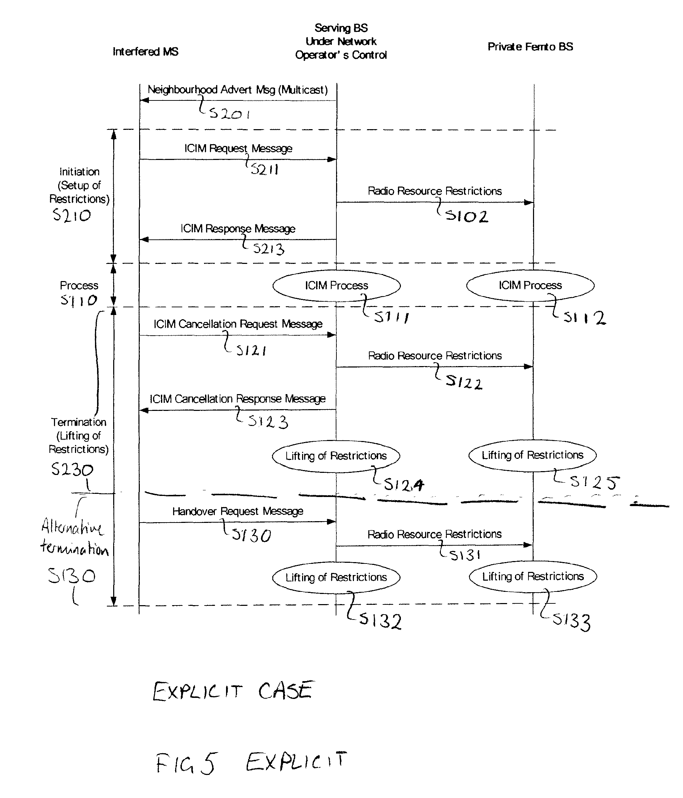

Figure 5 illustrates the signalling which can occur in the network in embodiments of the invention in which the interference mitigation method is initiated explicitly, referred to as the explicit case.

In the example illustrated by Figure 5, like reference numerals denote messages or steps that are the same as in the explicit case illustrated by Figure 4. A detailed description of messages or steps that are the same as in the implicit case and have been described above shall be omitted from the description of this example. The differences between the two cases lie in the setting up of restrictions.

In this example, the subscriber station is a mobile station, the first network station is a serving base station under the network operator's control, and the second network station is a private femto base station. Since this example deals with a case where interference is experienced by the mobile station, the mobile station is referred to as an interfered mobile station.

If the interfered mobile station has been informed about the cell IDs or base station IDs of private femto cells or base stations to which access is prohibited through a broadcast multicast or unicast neighbourhood advertisement message S201 or a related message beforehand then, upon satisfaction of a trigger condition or otherwise, it can send an interference mitigation request message S211 to the serving base station. Sending interference mitigation request message S211 may be prompted by satisfaction of a trigger condition such as the SINR of the signal received by the interfered mobile station from the serving base station under the network operator's control being below a threshold value. The mitigation request message contains the cell ID or the base station ID of the private femto base station contributing to the interference. The neighbourhood advertisement message S201 may simply contain a list of private femto base stations or cells. Alternatively, the interfered mobile station may be able to determine the presence of a private femto base station through other means such as a special structure of the preamble. Either way, the interfered mobile station is aware that handover to the private femto base station is prohibited, and can therefore explicitly request interference mitigation. Upon receiving the interference mitigation request S211, the serving base station matches the target cell ID against a list of known private femto cell IDs. If the target cell ID does not belong to a private femto base station or other base station to which access is prohibited, normal interference mitigation procedures follow, which are outside of the scope of this embodiment.

The placing of radio resource restrictions S102 and the alternatives that exist are discussed previously in the description of Figure 4. Following communication of these radio resource restrictions, where necessary, from the serving base station to the private femto base station, the serving base station transmits an interference mitigation response message S213 which is received by the interfered mobile station. The interference mitigation response message S213 confirms initiation of interference mitigation.

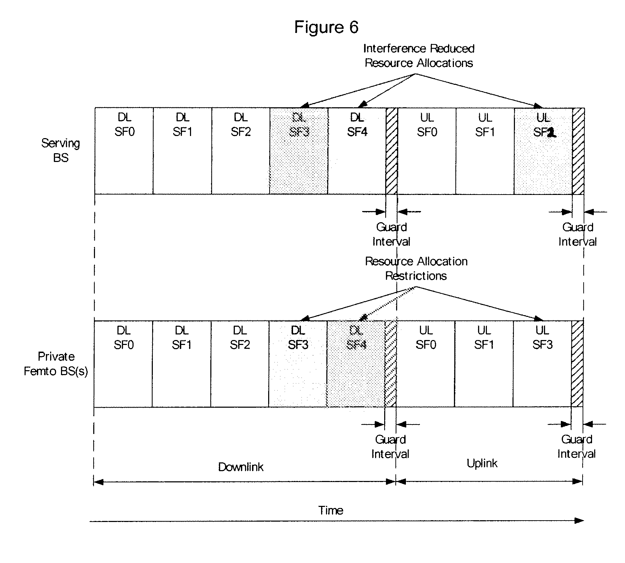

Figure 6 illustrates a specific example of how radio resources may be allocated in embodiments of the present invention. Figure 6 shows, as an example, the radio resource allocations in a Time Division Duplexing (TDD) system based on the IEEE802.16m (WiMAX) standard.

In wireless communication systems in which invention embodiments may be implemented, transmission of data packets may take place within "frames" which are the predetermined unit of time (and available transmission frequency bandwidth) in the system. The system may use TDD or frequency division duplexing (FDD). If TDD is used, each TDD frame conventionally has one downlink subframe followed by one uplink subframe, these in turn being divided in the time and frequency domain into a number of slots (which may be combined into transmission windows allocated for a certain purpose), and when utilising multiple transmit antennas possibly also divided spatially into a number of streams. Some standards, such as IEEE802.16m, implement a frame structure with a plurality of downlink subframes followed by a plurality of uplink subframes which together make up a radioframe (or frame). Alternatively or additionally several frames (or radio frames) can be considered together as a "superframe". Where superframes are present, some control signalling or other network features may be provided per superframe rather than per frame. Furthermore, in some standards it is possible to divide each subframe into one or more windows, or mini zones, which each consist of part of a subframe.

In the example shown in Figure 6 each frame consists of eight subframes. Of these eight; five are downlink subframes DLSFO-DLSF4, allocated for transmission from a network station to a subscriber station, and three are uplink subframes ULSFO-ULSF2, allocated for transmission from a subscriber station to a network station. The end of the downlink subframes is separated from the start of the uplink subframes by a guard interval. The end of the uplink subframes is followed by a guard interval.

Three of the subframes DLSF3, DLSF4, and ULSF2 are marked as resource allocation restrictions. In this example, the restrictions are blocked transmission resource windows, or blocked subframes, within which the private femto base station does not transmit i.e. they must not be used by the private femto base station to allocate traffic. A private femto base station is used as an example of a network station operating as a second network station described elsewhere in this document. It may be that the private femto base station is always blocked from using these particular subframes. Alternatively, this particular set of restrictions may be pre-defined and stored by the second network station so that upon receipt of an appropriate message from a controlling network entity they can be enabled. Alternatively, the serving base station or another controlling network entity may define these restrictions and transmit them via a backbone connection or wireless link to one or multiple other base stations. The serving base station or other controlling network entity may then instruct the one or multiple base stations to set up the restrictions.

Minizones within which the private femto base station does not transmit can be defined in place of subframes. A further alternative is to use idle frames, in which case the restrictions apply to a whole frame or multiple frames.

The serving base station under the network operator's control can thus avoid interference between itself and private femto base stations by allocating radio resources to the interfered mobile station to correspond to the restrictions applied to the private femto base station or base stations. In the example shown in Figure 6, subframes which are coincident in time with the blocked subframes are marked as interference reduced resource allocations. These are allocated as particular transmission resources for transmission between the serving base station and the interfered mobile station.

By choosing appropriate sizes for the interference reduced resource allocation areas, sufficient scheduling flexibility can be retained for the serving base station, such that performing interference mitigation has minimal impact on other mobile stations attached to the same serving base station. If the size or location of the allocation restrictions needs to be changed while the interference mitigation process is active (e.g. if the number of mobile stations requiring interference mitigation from a particular femto base station or set of femto base stations changes), then the serving base station can send the updated radio resource restrictions containing the modified allocation restrictions to the involved femto base station(s) via the backbone connection or wireless link.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. An interference mitigation method for use in a wireless communication network,
the wireless communication network having:
a subscriber station;
a first network station; and
a second network station; wherein
there is transmission between the subscriber station and the first network station, and the subscriber station is prohibited from using the second network station; and wherein
interference is experienced by the subscriber station as a result of transmissions from the second network station;
the method including adapting the allocation of transmission resources to be used in the wireless communication network to mitigate such interference.

2. The interference mitigation method according to claim 1, wherein adapting the allocation of transmission resources includes the second network station only using transmission resources outside of blocked transmission resources within which it does not transmit.

3. The interference mitigation method according to any of the preceding claims, wherein
adapting the allocation of transmission resources includes specifying particular transmission resources to be used by the first network station for communicating with the subscriber station.

4. The interference mitigation method according to claim 2 or 3,
wherein the particular transmission resources and the blocked transmission resources correspond to one another, so that the subscriber station uses the transmission resources unavailable to the second network station for communication with the first network station.

5. The interference mitigation method according to any of claims 2 to 4, further comprising:
defining the blocked transmission resources and/or the particular transmission resources in response to the current radio environment; or
further comprising the second network station storing a fixed set of blocked transmission resources; and/or the first network station storing a fixed set of particular transmission resources.

6. The interference mitigation method according to any of the preceding claims, wherein
the method further comprises the subscriber station initiating the interference mitigation method by transmitting a request to the first network station, the request containing information identifying the second network station; and wherein
the request is either a handover request in which the subscriber station is requesting a handover from the first network station to the second network station; in which case information notifying the subscriber station of a network station which it is prohibited from using is preferably transmitted in response to the handover request; or
the request is an interference mitigation request in which the second network station is identified; in which case information notifying the subscriber station of a network station which it is prohibited from using is provided over the network before the interference mitigation request.

7. The interference mitigation method according to any of the preceding claims, wherein
the method includes the first network station transmitting information notifying the subscriber station of a network station which it is prohibited from using.

8. The interference mitigation method according to any of the preceding claims, further comprising:
upon satisfaction of a termination condition, the subscriber station transmitting a termination request; and wherein
the termination condition is preferably based on a termination parameter whose value is not affected by execution of the interference mitigation method.

9. The interference mitigation method according to any of the preceding claims, wherein
the transmission resources are periods of time for transmission.

10. The interference mitigation method according to claims 2 and 3 or any claims dependent thereon, wherein
in order to compensate for any inaccuracy in synchronisation in the network the blocked transmission resources are chosen to be a superset of the particular transmission resources.

11. The interference mitigation method according to any of claims 2 to 10, wherein
in addition to the second network station, the wireless communication network includes at least one further network station which the subscriber station is prohibited from using; and wherein
adapting the allocation of transmission resources includes the or each further network station only using transmission resources outside of blocked transmission resources for that further network station.

12. A wireless communication network having a subscriber station, a first network station, and a second network station; the wireless communication network further comprising:
access limiting means operable to prohibit the subscriber station from using the second network station;
interference detection means operable to detect when interference is experienced by the subscriber station as a result of transmissions from the second network station; and
interference mitigation means operable to adapt the allocation of transmission resources to be used in the wireless communication network to mitigate such interference.

13. A subscriber station for use in a wireless communication network comprising the subscriber station, a first network station, and a second network station which the subscriber station is prohibited from using; the subscriber station comprising:
reception means operable to receive an indication of adapted transmission resources for its own use from the network when interference is experienced by the subscriber station as a result of transmissions from the second network station, the indication being of transmission resources adapted to mitigate such interference;
transmission means operable to transmit using the adapted allocation of transmission resources; and
control means operable to control the transmission means to use transmission resources in accordance with the indication.

14. A network station for use in a wireless communication network comprising the network station, a subscriber station, and a serving network station; the network station comprising:
access limiting means operable to prohibit the subscriber station from using it;
transmission means operable to transmit to other subscriber stations using allocated transmission resources;
control means operable to allocate transmission resources to the transmission means;
wherein
the control means is operable, for interference mitigation purposes, only to allocate transmission resources to the transmission means outside of blocked transmission resources within which it cannot transmit.

15. A network station for use in a wireless communication system comprising the network station, a subscriber station, and a second network station which the subscriber station is prohibited from using; the network station comprising:
transmission means operable to transmit to the subscriber station using allocated transmission resources;
control means operable to allocate transmission resources to the transmission means; where when interference is experienced by the subscriber station as a result of transmissions from the second network station, the control means is operable to adapt the allocation of transmission resources to mitigate such interference.
